# EUROPÄISCHE PATENTSCHRIFT

(11) **EP 0 639 485 B1**
(45) Veröffentlichungstag und Bekanntmachung des Hinweises auf die Patenterteilung: **15.10.1997**
(21) Anmeldenummer: 94111821.8
(22) Anmeldetag: 29.07.1994
(51) Int. Cl.: B60R 22/24, B60R 22/20

(54) **Befestigung für einen Sicherheitsgurt und die ihm zugehörigen Komponenten**
Fastening of a safety belt and its corresponding components
Fixation pour une ceinture de sécurité et ses composants

(30) Priorität: 18.08.1993 DE 4327717
(43) Veröffentlichungstag der Anmeldung: 22.02.1995
(73) Patentinhaber: ADAM OPEL AG, 65423 Rüsselsheim (DE)
(72) Erfinder: Arscholl, Ernst, D-65468 Trebur (DE); Doppler, Guido, Dipl.-Ing.(FH), D-55276 Oppenheim (DE); Derichs, Wilfried, Dipl.-Ing., D55232 Alzey (DE); Herbold, Gerhard, Dipl.-Ing.(FH), D-55411 Bingen (DE); Mies, Karl, Dipl.-Ing., D-65203 Wiesbaden (DE)
(74) Vertreter: Kümpfel, Heinz, Dipl.-Ing.

(56) Entgegenhaltungen:
- FR-A- 2 619 773
- GB-A- 2 263 620

## Beschreibung

Die Erfindung betrifft eine Befestigung für einen Sicherheitsgurt und die ihm zugehörigen Komponenten nach dem Oberbegriff des Patentanspruches 1.

Bei derartigen Befestigungen werden üblicherweise die dem Sicherheitsgurt zugeordneten Komponenten, wie z. B. der Gurtaufrollautomat, die Gurthöhenverstellung und der Umlenkbeschlag, separat im Fahrzeug miteinander oder einzeln im Inneren der Karosserie montiert. Dazu sind mehrere Montageschritte, wie z. B. Verschraubung der einzelnen Teile mit der Karosserie, Befestigung des Umlenkbeschlages an der Gurthöhenverstellung, Befestigung der Karosserieseitenwand- oder Säulenverkleidung und Einfädelung des Gurtbandes, notwendig. Die unterschiedlichen Befestigungstechniken erfordern abgestimmte Werkzeuge und Einrichtungen, die nur eine mäßig schnelle Befestigung ermöglichen. So müssen z. B. Verschraubungen mit einer Drehmomentkontrolle vorgenommen werden.

Diese Montageschritte müssen im Inneren der Karosserie in mehreren Folgen ausgeführt werden, wobei nacheinander unterschiedliche Teile mit verschiedenen Werkzeugen montiert werden. Dazu sind am Montageband mehrere Arbeitsstationen erforderlich.

Aus der FR-A-2 619 773 ist eine gattungsgemäße Befestigung für einen Sicherheitsgurt bekannt, bei welcher die dem Sicherheitsgurt zugehörigen Komponenten Gurtaufrollautomat und Umlenkbeschlag an einem Trägerteil angebracht sind, welches als vormontierte Baueinheit im Inneren der Karosserie befestigbar ist. Da der Gurtaufrollautomat relativ weit unten im Bodenbereich der Karosserie und der Umlenkbeschlag in Schulterhöhe eines Insassen angeordnet sind, muß das sich etwa in vertikale Richtung erstreckende Trägerteil relativ groß ausgebildet sein. Dadurch ist die Handhabung der vormontierten Baueinheit beim Transport und bei der Montage im Kraftfahrzeug erschwert.

Die Aufgabe der vorliegenden Erfindung liegt darin, eine Befestigung für Sicherheitsgurte der im Oberbegriff des Patentanspruchs 1 genannten Art so zu verbessern, daß bei einfacher konstruktiver Ausbildung der Fertigungsaufwand und die Montagezeit reduziert sind.

Diese Aufgabe wird erfindungsgemäß durch die Merkmale des kennzeichnenden Teils des Patentanspruches 1 gelöst.

Durch die erfindungsgemäßen Merkmale kann der Sicherheitsgurt mit den dazugeordneten Komponenten, Gurtaufrollautomat und Gurthöhenverstellung, außerhalb des Fahrzeuges ohne räumliche Einschränkungen vormontiert und als eine komplett vormontierte Baueinheit im Inneren der Karosserie, beispielsweise an einer Karosserieseitenwand oder Mittelsäule, befestigt werden. Die einzelnen Teile der vormontierten Baueinheit können dabei separat gefertigt, gelagert, transportiert und vormontiert sein. Die Montagezeit im Inneren der Karosserie wird dadurch wesentlich reduziert.

Die Verbindung des oberen Teils mit dem unteren Teil kann erst bei der Montage im Fahrzeug erfolgen. Dadurch reduziert sich die Größe bzw. die Länge der vormontierten Baueinheit, so daß sie zum Montageort im Fahrzeug zusammen mit einem Fahrzeugsitz befördert werden kann. Die vormontierte Baueinheit kann sich dabei zusammengeklappt auf dem Sitzkissen des Fahrzeugsitzes befinden. Eine Befestigungslasche des Sicherheitsgurtes kann bei dieser Montageweise in Abhängigkeit von der Konstruktion des Fahrzeugsitzes und des Fahrzeugbodens am Fahrzeugsitz befestigt werden.

Eine bevorzugte Ausführungsform der Erfindung sieht vor, daß der Gurtaufrollautomat mit dem unteren Teil und die Gurthöhenverstellung mit dem oberen Teil lösbar verbunden sind, wobei der Umlenkbeschlag an der Gurthöhenverstellung drehbar befestigt und das Gurtband durch eine Öffnung im oberen Teil hindurch geführt und in dieser Lage festgehalten ist. Eine auf diese Weise vormontierte Baueinheit kann besonders einfach gelagert, transportiert und als Modul in das Fahrzeug manuell oder maschinell eingebaut werden.

Der Sicherheitsgurt und seine Komponenten können besonders einfach und schnell zu einer Baueinheit vormontiert werden, wenn die lösbare Befestigung des Gurtaufrollautomaten mit dem unteren Teil und der Gurthöhenverstellung mit dem oberen Teil durch federnde Rastvorrichtungen erfolgt. Dabei können jeweils eine oder mehrere Rastvorrichtungen vorgesehen sein.

Zur Verbindung des Gurtaufrollautomaten mit dem unteren Teil ist erfindungsgemäß vorgesehen, daß die federnde Rastvorrichtung für den Gurtaufrollautomat aus einem eine Schenkelfeder aufweisenden und mit dem unteren Teil verbundenen Aufnahmekörper besteht, der mit einem als Raste ausgebildeten Ende eines dem Gurtaufrollautomaten zugeordneten Gewindebolzens zusammenwirkt, wobei ein mit dem unteren Teil verbundener Positionierstift in eine am Gurtaufrollautomat vorgesehene Positionierbohrung einsteckbar ist. Dadurch können das untere Teil und der Gurtaufrollautomat bei der Vormontage schnell zueinander ausgerichtet und verbunden werden.

Um die Befestigung der Gurthöhenverstellung am oberen Teil besonders einfach zu halten, besteht eine der dafür vorgesehenen Rastvorrichtungen aus einem mit dem oberen Teil verbundenen und einen Klips aufweisenden Aufnahmearm, wobei der Klips verrastbar in eine Rastöffnung an der Gurthöhenverstellung eingreift. Eine weitere Rastvorrichtung, die mit Abstand zu der ersten Rastvorrichtung an der Gurthöhenverstellung angeordnet ist, besteht aus zwei am verstellbaren Teil der Gurthöhenverstellung angebrachten Rasten, die mit an einer im oberen Teil längsverschieblich geführten Blende angeformten Gegenrasten zusammenwirken. Auf diese Weise ist eine einfache und schnelle Verbindung der Gurthöhenverstellung mit dem oberen Teil sowie eine Ausrichtung der beiden Teile zueinander verwirklicht.

Die vormontierte Baueinheit kann an der Karosserie genau positioniert und in dieser Lage festgehalten werden, wenn gemäß einer vorteilhaften Ausbildung der Erfindung am oberen Teil und am unteren Teil Rastmittel zur Verbindung mit der Karosserie vorgesehen sind, die in an der Karosserie entsprechend angeordnete Rastöffnungen eingreifen. Die Rastmittel können dabei als mit dem oberen und/oder unteren Teil verbundene Klipse ausgebildet sein, die bei der Montage in die entsprechenden Rastöffnungen in der Karosserie rastend eingesteckt werden. In einem weiteren Montageschritt kann dann die vormontierte Baueinheit fest mit der Karosserie verbunden werden.

Eine einfache und schnelle Befestigung der vormontierten Baueinheit im Fahrzeug ist dadurch gegeben, daß die Befestigung im Inneren der Karosserie, beispielsweise an einer Mittelsäule, durch Schraubmittel erfolgt. Die der vormontierten Baueinheit zugeordneten Schraubmittel können als Gewindebolzen ausgebildet und am Gurtaufrollautomat sowie an der Gurthöhenverstellung angeordnet sein. Funktionsmäßig sind dem Gurtaufrollautomaten ein und der Gurthöhenverstellung zwei Gewindebolzen zugeordnet. Am Gurtaufrollautomat ist dabei zur Sicherung gegen Verdrehung bei der Befestigung eine Nase vorgesehen, die in eine entsprechende Bohrung in der Karosserie eingreift.

Die vormontierte Baueinheit kann sowohl im Bereich eines Vordersitzes an der Mittelsäule als auch im Bereich eines hinteren Sitzes an der Karosserieseitenwand befestigt werden. Bei der Befestigung der vormontierten Baueinheit durchsetzen die an der Gurthöhenverstellung und am Gurtaufrollautomat angeordneten Gewindebolzen entsprechende Bohrungen in der Karosserie, so daß die vormontierte Baueinheit von außen mit Muttern fest angezogen werden kann. Die leichte Zugänglichkeit der Befestigungsstellen von außen vereinfacht den Montagevorgang und reduziert die Montagezeit.

Das obere und das untere Teil können besonders einfach und schnell miteinander verbunden werden, wenn die Verbindung zwischen den beiden Teilen durch eine formschlüssige Rastverbindung erfolgt. Zu diesem Zwecke ist am unteren Ende des oberen Teils ein nach innen abgesetzter Verbindungsabschnitt vorgesehen, der beim Zusammenstecken der beiden Teile zur Anlage an die Innenkontur am oberen Ende des unteren Verkleidungsteils kommt. Zum Zusammenhalten der beiden Teile sind im Verbindungsbereich entsprechende Rastmittel angeordnet. Die zum Hindurchführen des Gurtbandes vorgesehene Öffnung ist dabei am oberen Teil angeordnet.

Eine besonders vorteilhafte Ausführungsform der Befestigung für den Sicherheitsgurt sieht vor, daß das obere Teil und das untere Teil als Verkleidungsteile des Karosserieinnenraumes, insbesondere als Verkleidungsteile einer Mittelsäule oder einer Karosserieseitenwand, ausgebildet sind. Die Komponenten des Sicherheitsgurtes können dabei direkt mit diesen Verkleidungsteilen verbunden und als vormontierte Baueinheit im Inneren der Karosserie befestigt werden.

Die Erfindung wird im folgenden anhand der in den Zeichnungen dargestellten Ausführungsbeispiele näher erläutert. Es zeigen:
- Fig. 1:: eine perspektivische Ansicht des Sicherheitsgurtes mit allen ihm zugehörigen Komponenten, die zu einer Baueinheit vormontiert sind;
- Fig. 2:: eine perspektivische Ansicht der einzelnen Komponenten des Sicherheitsgurtes nach Fig. 1, bei dem das Trägerteil aus zwei miteinander verbindbaren Teilen besteht;
- Fig. 3:: eine perspektivische Darstellung der Montagefolgen bei der Befestigung des Sicherheitsgurtes nach Fig. 2;
- Fig. 4:: eine perspektivische Ansicht einer Karosserie eines Kraftfahrzeuges mit einer noch nicht befestigten vormontierten Baueinheit nach Fig. 1 und
- Fig. 5:: eine vergrößerte Darstellung der Befestigung der vormontierten Baueinheit im Bereich des Gurtaufrollautomaten nach Fig. 1.

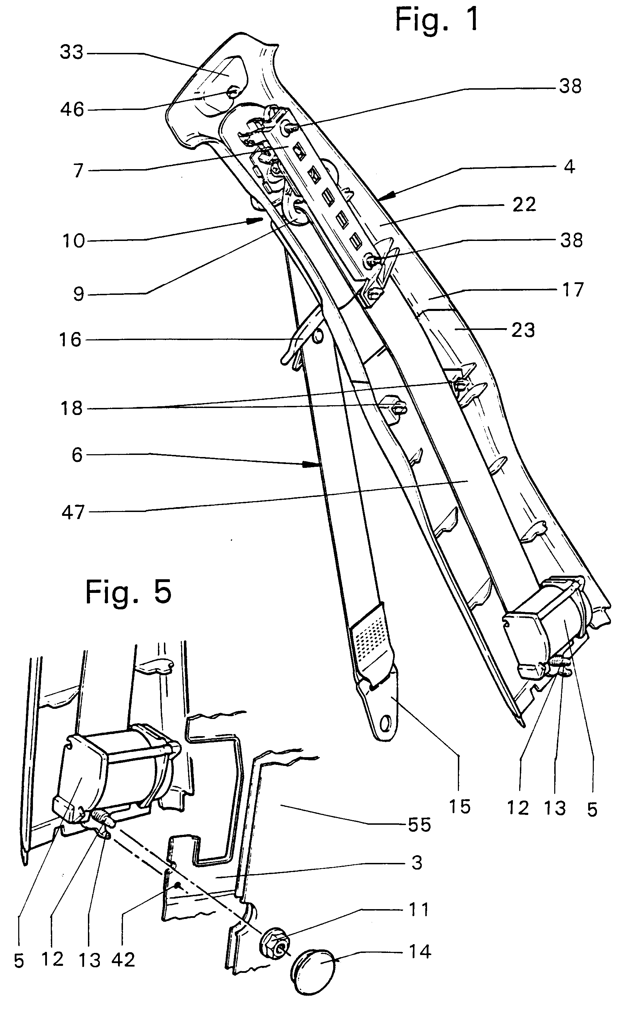

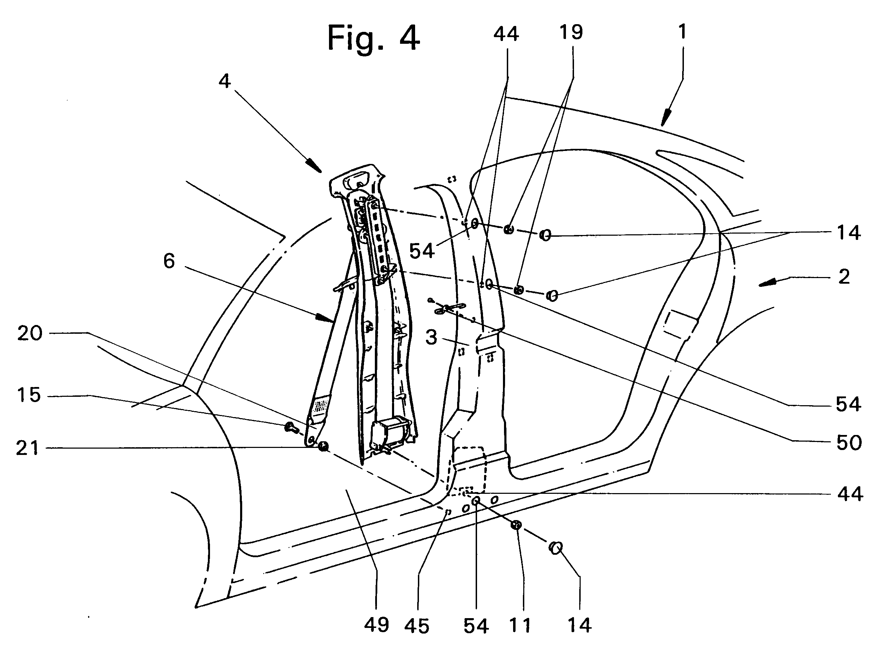

Die Fig. 1 zeigt einen Sicherheitsgurt 6 mit allen ihm zugehörigen Komponenten, die zu einer Baueinheit 4 vormontiert sind. Die vormontierte Baueinheit 4 besteht im wesentlichen aus dem Sicherheitsgurt 6, dem Gurtaufrollautomaten 5 und der Gurthöhenverstellung 7 mit dem Umlenkbeschlag 9, die entsprechend am unteren Teil 23 und oberen Teil des Trägerteils 17 lösbar befestigt sind. Das obere Teil 22 und das untere Teil 23 sind dabei als Verkleidungsteile 22, 23 einer Mittelsäule 3 (Fig. 4) ausgebildet, wobei eine Öffnung 10 zum Hindurchführen des Gurtbandes 47 am oberen Verkleidungsteil 22 vorgesehen ist. Die Öffnung 10 ist dabei von einer in dem Verkleidungsteil 22 längsverschieblich geführten Blende 8 abgedeckt. An der vormontierten Baueinheit 4 sind am Gurtaufrollautomat 5 und an der Gurthöhenverstellung 7 Gewindebolzen 12, 38 und an den Verkleidungsteilen 22, 23 Klipse 18, 46 zur Befestigung an der Mittelsäule 3 vorgesehen, wobei die Klipse 18, 46 rastend in entsprechende Rastöffnungen an der Mittelsäule eingreifen.

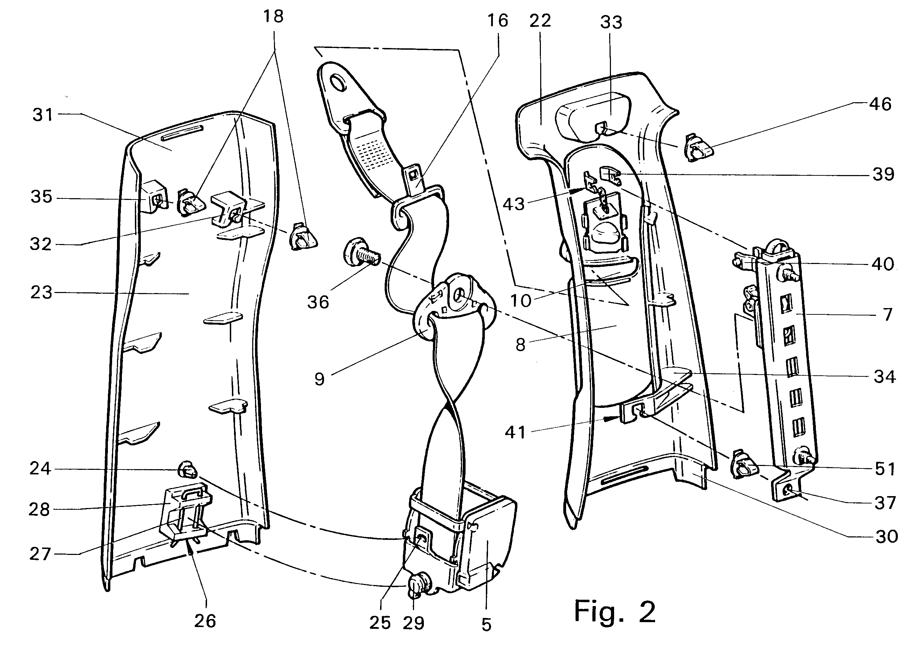

In Fig. 2 ist der Sicherheitsgurt 6 mit sämtlichen ihm zugehörigen Komponenten im nicht montierten Zustand dargestellt. Die Verbindung zwischen den beiden Verkleidungsteilen 22, 23 erfolgt durch eine formschlüssige Rastverbindung. Dazu weist das Verkleidungsteil 22 am unteren Ende einen nach innen abgesetzten Verbindungsabschnitt 30 auf, der beim Zusammenstecken der beiden Verkleidungsteile 22, 23 zur Anlage an die Innenkontur 31 am oberen Ende des Verkleidungsteils 23 kommt. Zum Zusammenhalten der beiden Verkleidungsteile 22, 23 sind im Verbindungsbereich entsprechende Rastmittel angeordnet.

Zur lösbaren Verbindung der Gurthöhenverstellung mit dem Verkleidungsteil 22 sind, wie aus der Fig. 2 ersichtlich, Rastvorrichtungen 41, 43 vorgesehen. Die Rastvorrichtung 41 besteht aus einer mit dem Verkleidungsteil 22 verbundenen Klipsaufnahme 34, in der ein Klips 51 eingesetzt ist. Der Klips 51 rastet in der an der Gurthöhenverstellung 7 angebrachten Rastöffnung 37 bei der Befestigung ein. Die Rastvorrichtung 43 besteht aus am verstellbaren Teil der Gurthöhenverstellung 7 angebrachten Rasten 40, die bei der Befestigung mit entsprechend an der längsverschieblich am Verkleidungsteil 22 angeordneten Blende 8 angebrachten Gegenrasten 39 zusammenwirken.

Wie die Fig. 2 weiterhin zeigt, ist zur Befestigung des Gurtaufrollautomaten 5 am Verkleidungsteil 23 die Rastvorrichtung 26 vorgesehen. Sie besteht aus einem mit dem Verkleidungsteil 23 verbundenen Aufnahmekörper 28, in dem eine Schenkelfeder 27 zur Verrastung mit einem am Gurtaufrollautomaten 5 als Raste 29 ausgebildeten Ende des Gewindebolzens 12 eingesetzt ist. Zur Ausrichtung des Gurtaufrollautomaten 5 gegenüber dem Verkleidungsteil 23 ist am Verkleidungsteil 23 ein Positionierstift 24 vorgesehen, der in eine am Gurtaufrollautomaten 5 entsprechend angeordnete Positionierbohrung 25 bei der Befestigung eingreift.

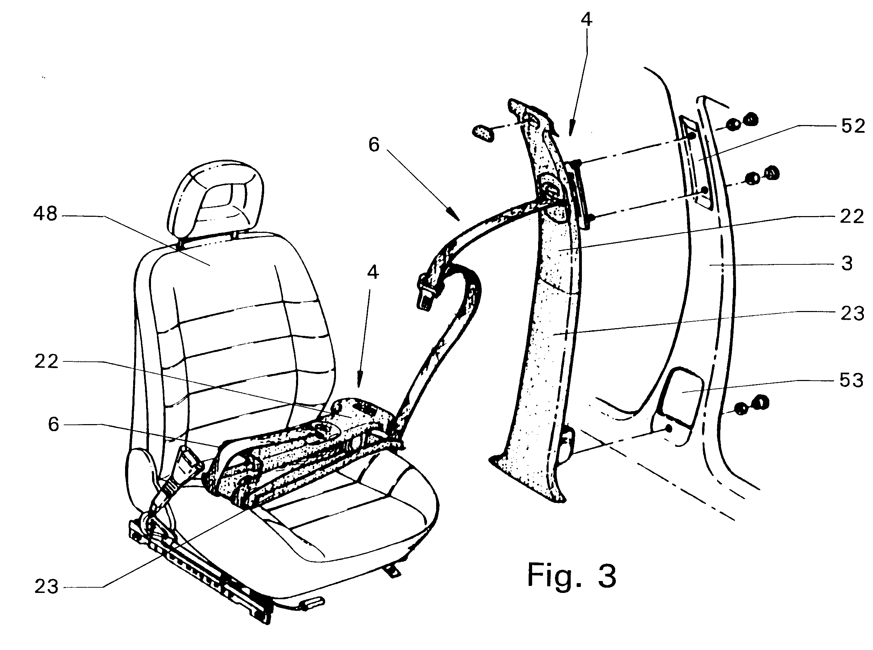

In Fig. 3 ist die Befestigung des Sicherheitsgurtes 6 mit den ihm zugehörigen Komponenten, wie in Fig. 2 gezeigt, in einzelnen Montagefolgen dargestellt. Zunächst wird der Sicherheitsgurt 6 als vormontierte Baueinheit zusammengeklappt auf den Fahrzeugsitz 48 gelegt und zusammen mit dem Fahrzeugsitz 48 in das Fahrzeuginnere zum Montageort befördert. Danach werden beide Verkleidungsteile 22, 23 zusammengesteckt und zur Befestigung an der Mittelsäule 3 ausgerichtet. Bei der Befestigung werden die Gurthöhenverstellung 7 und der Gurtaufrollautomat 5 in entsprechende Öffnungen 52, 53 an der Mittelsäule 3 derart eingesteckt, daß die an den Verkleidungsteilen 22, 23 angebrachten Klipse 18, 46 an der Mittelsäule 3 einrasten und die an der Gurthöhenverstellung 7 und am Gurtaufrollautomat 5 angebrachten Gewindebolzen 12, 38 in entsprechende Bohrungen 44 an der Mittelsäule 3 eingreifen. Die am Gurtaufrollautomaten 5 zur Sicherung gegen Verdrehung angeordnete Nase 13 greift dabei, wie in Fig. 5 zur Verdeutlichung vergrößert dargestellt, formschlüssig in eine Bohrung 42 an der Mittelsäule 3 ein.

Wie aus den Fig. 3 und 4 ersichtlich, kann die auf diese Weise an der Mittelsäule 3 der Karosserie 1 positionierte vormontierte Baueinheit 4 sehr leicht von außen mit Muttern 11, 19 fest gezogen werden, wobei die Öffnungen 54 an der Außenwand 55 der Mittelsäule 3 mit Stopfen 14 abgedichtet werden.

Die Befestigungslasche 15 des Sicherheitsgurtes 6 wird ebenfalls im unteren Bereich der Mittelsäule 3 an der Karosserie 1 befestigt. Dazu sind die Schraubmittel 20, 21 und eine Bohrung 45 in der Karosserie 1 vorgesehen.

### Bezugszeichenliste

- 1: Karosserie
- 2: Karosserieseitenwand
- 3: Mittelsäule
- 4: vormontierte Baueinheit
- 5: Gurtaufrollautomat
- 6: Sicherheitsgurt
- 7: Gurthöhenverstellung
- 8: Blende
- 9: Umlenkbeschlag
- 10: Öffnung
- 11: Mutter
- 12: Gewindebolzen
- 13: Nase
- 14: Stopfen
- 15: Befestigungslasche
- 16: Schloßzunge
- 17: Trägerteil
- 18: Klips
- 19: Mutter
- 20: Schraube
- 21: Mutter
- 22: Verkleidungsteil
- 23: Verkleidungsteil
- 24: Positionierstift
- 25: Positionierbohrung
- 26: Rastvorrichtung
- 27: Schenkelfeder
- 28: Aufnahmekörper
- 29: Raste
- 30: Innenkontur
- 31: Verbindungsabschnitt
- 32: Klipsaufnahme
- 33: Klipsaufnahme
- 34: Aufnahmearm
- 35: Klipsaufnahme
- 36: Schraube
- 37: Rastöffnung
- 38: Gewindebolzen
- 39: Gegenrasten
- 40: Rasten
- 41: Rastvorrichtung
- 42: Bohrung
- 43: Rastvorrichtung
- 44: Bohrung
- 45: Bohrung
- 46: Klips
- 47: Gurtband
- 48: Fahrzeugsitz
- 49: Karosserieöffnung
- 50: Umlenkbügel
- 51: Klips
- 52: Öffnung
- 53: Öffnung
- 54: Öffnung
- 55: Außenwand

## Patentansprüche

1. Befestigung für einen Sicherheitsgurt und die ihm zugeordneten Komponenten Gurtaufrollautomat, Umlenkbeschlag usw. im Inneren der Karosserie eines Kraftfahrzeuges, wobei ein Gurtband vom Gurtaufrollautomaten über einen Umlenkbeschlag abzieh- und aufwickelbar und der Sicherheitsgurt (6) zusammen mit den ihm zugeordneten Komponenten als auf einem Trägerteil (17) vormontierte Baueinheit (4) im Inneren der Karosserie (1) befestigbar ist, **dadurch gekennzeichnet**, daß auf dem Trägerteil (17) eine den Umlenkbeschlag (9) aufweisende Gurthöhenverstellung (7) vormontiert ist und daß das Trägerteil (17) aus einem oberen Teil (22) und einem mit diesem verbindbaren unteren Teil (23) besteht, wobei die Öffnung (10) zum Hindurchführen des Gurtbandes (47) an einem der beiden Teile (22, 23) angeordnet ist.

2. Befestigung für einen Sicherheitsgurt nach Anspruch 1, **dadurch gekennzeichnet**, daß der Gurtaufrollautomat (5) mit dem unteren Teil (23) und die Gurthöhenverstellung (7) mit dem oberen Teil 22 lösbar verbunden sind, wobei der Umlenkbeschlag (9) an der Gurthöhenverstellung (7) drehbar befestigt und das Gurtband (47) durch die Öffnung (10) hindurchgeführt und in dieser Lage fest gehalten ist.

3. Befestigung für einen Sicherheitsgurt nach Anspruch 1 oder 2, **dadurch gekennzeichnet**, daß die lösbare Befestigung des Gurtaufrollautomaten (5) am unteren Teil (23) und der Gurthöhenverstellung (7) am oberen Teil (22) durch federnde Rastvorrichtungen (26, 41, 43) erfolgt.

4. Befestigung für einen Sicherheitsgurt nach Anspruch 3, **dadurch gekennzeichnet**, daß die federnde Rastvorrichtung (26) für den Gurtaufrollautomaten (5) aus einem eine Schenkelfeder (27) aufweisenden und mit dem Trägerteil (17) verbundenen Aufnahmekörper (28) besteht, der mit einem als Raste (29) ausgebildeten Ende eines dem Gurtaufrollautomaten (5) zugeordneten Gewindebolzens (12) zusammenwirkt, wobei ein mit dem unteren Teil (23) verbundener Positionierstift (24) in eine am Gurtaufrollautomaten (5) entsprechend vorgesehene Positionierbohrung (25) einsteckbar ist.

5. Befestigung für einen Sicherheitsgurt nach Anspruch 3, **dadurch gekennzeichnet**, daß die Rastvorrichtung (41) für die Gurthöhenverstellung (7) aus einem mit dem oberen Teil (22) verbundenen und einen Klips (51) aufweisenden Aufnahmearm (34) besteht, wobei der Klips (51) verrastbar in eine Rastöffnung (37) an der Gurthöhenverstellung (7) eingreift.

6. Befestigung für einen Sicherheitsgurt nach Anspruch 3, **dadurch gekennzeichnet**, daß eine weitere Rastvorrichtung (43) für die Gurthöhenverstellung (7) aus am verstellbaren Teil der Gurthöhenverstellung (7) angebrachten Rasten (40) besteht, die mit an einer im oberen Teil (22) längsverschieblich geführten Blende (8) angeformten Gegenrasten (39) zusammenwirken.

7. Befestigung für einen Sicherheitsgurt nach mindestens einem der vorangehenden Ansprüche, **dadurch gekennzeichnet**, daß am oberen Teil (22) und am unteren Teil (23) Rastmittel (18, 32, 33, 35, 46) zur Verbindung mit der Karosserie (1) vorgesehen sind, die in an der Karosserie (1) entsprechend angeordnete Rastöffnungen eingreifen.

8. Befestigung für einen Sicherheitsgurt nach mindestens einem der vorangehenden Ansprüche, **dadurch gekennzeichnet**, daß die Befestigung der vormontierten Baueinheit (4) im Inneren der Karosserie (1), vorzugsweise an einer Mittelsäule (3), durch Schraubmittel (11, 12, 19, 38) erfolgt.

9. Befestigung für einen Sicherheitsgurt nach Anspruch 8, **dadurch gekennzeichnet**, daß die der vormontierten Baueinheit (4) zugeordneten Schraubmittel als Gewindebolzen (12, 38) ausgebildet sind, die am Gurtaufrollautomaten (5) und an der Gurthöhenverstellung (7) angeordnet sind.

10. Befestigung für einen Sicherheitsgurt nach mindestens einem der vorangehenden Ansprüche, **dadurch gekennzeichnet**, daß am Gurtaufrollautomaten (5) zur Sicherung gegen Verdrehung bei der Befestigung eine Nase (13) vorgesehen ist, die in eine entsprechende Bohrung (42) in der Karosserie (1) eingreift.

11. Befestigung für einen Sicherheitsgurt nach Anspruch 9, **dadurch gekennzeichnet**, daß in der Karosserie (1) entsprechende Bohrungen (44) zur Aufnahme der Gewindebolzen (12, 38) vorgesehen sind.

12. Befestigung für einen Sicherheitsgurt nach mindestens einem der vorangehenden Ansprüche, **dadurch gekennzeichnet**, daß die Verbindung zwischen dem oberen Teil (22) und dem unteren Teil (23) durch eine formschlüssige Rastverbindung erfolgt.

13. Befestigung für einen Sicherheitsgurt nach mindestens einem der vorangehenden Ansprüche, **dadurch gekennzeichnet**, daß die Öffnung (10) zum Hindurchführen des Gurtbandes (47) am oberen Teil (22) angeordnet ist.

14. Befestigung für einen Sicherheitsgurt nach mindestens einem der vorangehenden Ansprüche, **dadurch gekennzeichnet,** daß das obere Teil (22) und das untere Teil (23) als Verkleidungsteile (22, 23) des Karosserieinnenraumes ausgebildet sind.

15. Befestigung für einen Sicherheitsgurt nach mindestens einem der vorangehenden Ansprüche, **dadurch gekennzeichnet,** daß das obere Teil (22) und das untere Teil (23) als Verkleidungsteile (22, 23) einer Mittelsäule (3) ausgebildet sind.

16. Befestigung für einen Sicherheitsgurt nach mindestens einem der vorangehenden Ansprüche, **dadurch gekennzeichnet,** daß das obere Teil (22) und das untere Teil (23) als Verkleidungsteile (22, 23) einer Karosserieseitenwand (2) ausgebildet sind.

17. Befestigung für einen Sicherheitsgurt nach mindestens einem der vorangehenden Ansprüche, **dadurch gekennzeichnet,** daß die Befestigungslasche (15) des Sicherheitsgurtes (6) am Fahrzeugsitz (48) befestigt ist.

18. Befestigung für einen Sicherheitsgurt nach mindestens einem der vorangehenden Ansprüche 1 bis 16, **dadurch gekennzeichnet,** daß die Befestigungslasche (15) des Sicherheitsgurtes (6) im unteren Bereich der Mittelsäule (3) an der Karosserie (1) befestigt ist.

## Claims

1. Fixing for a safety belt and the components, automatic belt winder, guide fitting etc., associated with it inside the body of a motor vehicle, wherein a belt strap can be unwound and wound up by the automatic belt winder over a guide fitting and the safety belt (6) together with the components associated with it can be fixed inside the body (1) as a unit (4) preassembled on a carrier portion (17), characterised in that on the carrier portion (17) is preassembled a belt height adjuster (7) comprising the guide fitting (9) and in that the carrier portion (17) consists of an upper portion (22) and a lower portion (23) which can be connected thereto, the opening (10) for passage of the belt strap (47) being arranged on one of the two portions (22, 23).

2. Fixing for a safety belt according to claim 1, characterised in that the automatic belt winder (5) is releasably connected to the lower portion (23) and the belt height adjuster (7) is releasably connected to the upper portion (22), the guide fitting (9) being rotatably fixed to the belt height adjuster (7) and the belt strap (47) being passed through the opening (10) and held fast in this position.

3. Fixing for a safety belt according to claim 1 or 2, characterised in that releasable fixing of the automatic belt winder (5) to the lower portion (23) and of the belt height adjuster (7) to the upper portion (22) takes place by spring latch means (26, 41, 43).

4. Fixing for a safety belt according to claim 3, characterised in that the spring latch means (26) for the automatic belt winder (5) consists of a receptacle body (28) which comprises a leg spring (27) and is connected to the carrier portion (17) and which cooperates with one end, designed as a catch (29), of a threaded bolt (12) associated with the automatic belt winder (5), wherein a positioning pin (24) connected to the lower portion (23) can be inserted in a positioning bore (25) provided on the automatic belt winder (5) accordingly.

5. Fixing for a safety belt according to claim 3, characterised in that the latch means (41) for the belt height adjuster (7) consists of a receptacle arm (34) connected to the upper portion (22) and comprising a clip (51), wherein the clip (51) engages latchably in a latch opening (37) on the belt height adjuster (7).

6. Fixing for a safety belt according to claim 3, characterised in that an additional latch means (43) for the belt height adjuster (7) consists of catches (40) which are mounted on the adjustable portion of the belt height adjuster (7) and which cooperate with countercatches (39) formed integrally with a panel (8) guided longitudinally slidably in the upper portion (22).

7. Fixing for a safety belt according to one or more of the preceding claims, characterised in that on the upper portion (22) and on the lower portion (23) are provided latch means (18, 32, 33, 35, 46) for connection to the body (1), which engage in latch openings arranged on the body (1) accordingly.

8. Fixing for a safety belt according to one or more of the preceding claims, characterised in that fixing of the preassembled unit (4) inside the body (1), preferably to a middle pillar (3), takes place by screw means (11, 12, 19, 38).

9. Fixing for a safety belt according to claim 8, characterised in that the screw means associated with the preassembled unit (4) are constructed as threaded bolts (12, 38) which are arranged on the automatic belt winder (5) and on the belt height adjuster (7).

10. Fixing for a safety belt according to one or more of the preceding claims, characterised in that on the automatic belt winder (5) to prevent rotation during fixing is provided a projection (13) which engages in a corresponding bore (42) in the body (1).

11. Fixing for a safety belt according to claim 9, characterised in that in the body (1) are provided corresponding bores (44) for receiving threaded bolts (12, 38).

12. Fixing for a safety belt according to one or more of the preceding claims, characterised in that the connection between the upper portion (22) and the lower portion (23) is made by a form-locking latch connection.

13. Fixing for a safety belt according to one or more of the preceding claims, characterised in that the opening (10) for passage of the belt strap (47) is arranged on the upper portion (22).

14. Fixing for a safety belt according to one or more of the preceding claims, characterised in that the upper portion (22) and the lower portion (23) are constructed as lining portions (22, 23) of the body interior.

15. Fixing for a safety belt according to one or more of the preceding claims, characterised in that the upper portion (22) and the lower portion (23) are constructed as lining portions (22, 23) of a middle pillar (3).

16. Fixing for a safety belt according to one or more of the preceding claims, characterised in that the upper portion (22) and the lower portion (23) are constructed as lining portions (22, 23) of a body side panel (2).

17. Fixing for a safety belt according to one or more of the preceding claims, characterized in that the fixing strap (15) of the safety belt (6) is fixed to the vehicle seat (48).

18. Fixing for a safety belt according to one or more of the preceding claims 1 to 16, characterized in that the fixing strap (15) of the safety belt (6) is fixed to the body (1) in the lower region of the middle pillar (3).

## Revendications

1. Fixation pour une ceinture de sécurité et pour les composants associés à celle-ci, enrouleur de ceinture, patte de renvoi, etc, à l'intérieur de la carrosserie d'un véhicule automobile, une sangle de ceinture pouvant être dévidée de et enroulée sur un enrouleur automatique en passant par une patte de déviation, la ceinture de sécurité (6) avec les composants associés à celle-ci pouvant être fixée à l'intérieur de la carrosserie (1) en tant qu'unité de montage (4) préassemblée sur un élément de support (17), caractérisé par le fait qu'un moyen (7) de réglage de hauteur de la ceinture qui porte la patte de déviation (9) est prémonté sur l'élément de support (17), par le fait que l'élément de support (17) se compose d'une partie supérieure (22) et d'une partie inférieure (23) pouvant être liée à la première, l'ouverture (10) pour le passage de la sangle (47) de ceinture de sécurité étant aménagée dans l'une des deux parties (22, 23).

2. Fixation pour une ceinture de sécurité selon la revendication 1, caractérisée par le fait que l'enrouleur automatique (5) et le moyen (7) de réglage de hauteur de la ceinture sont liés de manière séparable respectivement à la partie inférieure (23) et à la partie supérieure (22), la patte de déviation (9) étant fixée avec possibilité de rotation sur le moyen (7) de réglage de hauteur de la ceinture et la sangle (47) de ceinture de sécurité passant par l'ouverture (10) et étant maintenue fermement dans cette position.

3. Fixation pour une ceinture de sécurité selon la revendication 1 ou 2, caractérisée par le fait que la fixation démontable de l'enrouleur automatique (5) sur la partie inférieure (23) et du moyen (7) de réglage de hauteur de la ceinture sur la partie supérieure (22) a lieu à l'aide de dispositifs à encliquetage (26, 41, 43) élastiques

4. Fixation pour une ceinture de sécurité selon la revendication 3, caractérisée par le fait que le dispositif à encliquetage (26) élastique pour l'enrouleur automatique (5) de ceinture de sécurité est formé d'un corps de montage (28) comportant un ressort à branches (27) et lié à l'élément de support (17), qui coopère avec une extrémité conformée en cran d'arrêt (29) d'un corps de boulon (12) associé à l'enrouleur automatique (5), une goupille de positionnement (24) solidaire de la partie inférieure (23) pouvant être insérée dans un trou de positionnement (25) prévu sur l'enrouleur automatique (5) de ceinture de sécurité.

5. Fixation pour une ceinture de sécurité selon la revendication 3, caractérisée par le fait que le dispositif à encliquetage (41) pour le moyen (7) de réglage de hauteur de la ceinture de sécurité est formé d'un bras de montage (34) qui est lié à la partie supérieure (22) et comportant un clip (51), le clip (51) pénétrant à des fins d'encliquetage dans une ouverture d'enliquetage (37) sur le moyen (7) de réglage de hauteur de la ceinture de sécurité.

6. Fixation pour une ceinture de sécurité selon la revendication 3, caractérisée par le fait qu'un dispositif à encliquetage (43) supplémentaire pour le moyen (7) de réglage de hauteur de la ceinture de sécurité est formé de crans (40) aménagés sur la partie réglable du moyen (7) de réglage de hauteur de la ceinture, qui coopèrent avec des crans conjugués (39) aménagés sur un cache (8) monté coulissant dans la partie supérieure (22).

7. Fixation pour une ceinture de sécurité selon au moins une des revendications précédentes, caractérisée par le fait qu'il est prévu sur la partie supérieure (22) et sur la partie inférieure (23) des moyens à encliquetage (18, 32, 33, 35, 46) pour la liaison avec la carrosserie (1), qui s'engagent dans des ouvertures d'encliquetage adaptées dans la carrosserie (1).

8. Fixation pour une ceinture de sécurité selon au moins une des revendications précédentes, caractérisée par le fait que la fixation de l'unité de montage (4) préassemblée à l'intérieur de la carrosserie (1), de préférence sur un montant de milieu (3), a lieu à l'aide de moyens d'assemblage vissés (11, 12, 19, 38).

9. Fixation pour une ceinture de sécurité selon la revendication 8, caractérisée par le fait que les moyens d'assemblage vissés associés à l'unité de montage (4) préassemblée sont agencés sous la forme de corps de boulon (12, 38) disposés sur l'enrouleur automatique (5) et sur le moyen (7) de réglage de hauteur de la ceinture de sécurité.

10. Fixation pour une ceinture de sécurité selon au moins une des revendications précédentes, caractérisée par le fait qu'il est prévu sur l'enrouleur automatique (5), aux fins de l'immobiliser en rotation lors de la fixation, un ergot (13) qui pénètre dans un trou (42) adapté dans la carrosserie (1).

11. Fixation pour une ceinture de sécurité selon la revendication 9, caractérisée par le fait que des trous (44) adaptés sont prévus dans la carrosserie (1) pour recevoir les corps de boulon (12, 38).

12. Fixation pour une ceinture de sécurité selon au moins une des revendications précédentes, caractérisée par le fait que la liaison entre la partie supérieure (22) et la partie inférieure (23) a lieu à l'aide d'une liaison à encliquetage à complémentarité de formes.

13. Fixation pour une ceinture de sécurité selon au moins une des revendications précédentes, caractérisée par le fait que l'ouverture (10) pour le passage de la sangle (47) de ceinture de sécurité est disposée dans la partie supérieure (22).

14. Fixation pour une ceinture de sécurité selon au moins une des revendications précédentes, caractérisée par le fait que la partie supérieure (22) et la partie inférieure (23) sont agencées sous la forme d'éléments d'habillage (22, 23) de l'intérieur de l'habitacle.

15. Fixation pour une ceinture de sécurité selon au moins une des revendications précédentes, caractérisée par le fait que la partie supérieure (22) et la partie inférieure (23) sont agencées sous la forme d'éléments d'habillage (22, 23) d'un montant de milieu (3).

16. Fixation pour une ceinture de sécurité selon au moins une des revendications précédentes, caractérisée par le fait que la partie supérieure (22) et la partie inférieure (23) sont agencées sous la forme d'éléments d'habillage (22, 23) d'une paroi latérale (2) de carrosserie.

17. Fixation pour une ceinture de sécurité selon au moins une des revendications précédentes, caractérisée par le fait que la patte de fixation (15) de la ceinture de sécurité (6) est fixée au siège de véhicule (48).

18. Fixation pour une ceinture de sécurité selon au moins une des revendications précédentes 1 à 16, caractérisée par le fait que la patte de fixation (15) de la ceinture de sécurité (6) est fixée à la carrosserie (1) dans la région inférieure du montant de milieu (3).
